# EUROPÄISCHE PATENTSCHRIFT

(11) **EP 0 329 843 B1**
(45) Veröffentlichungstag und Bekanntmachung des Hinweises auf die Patenterteilung: **07.01.1993**
(21) Anmeldenummer: 88120792.2
(22) Anmeldetag: 13.12.1988
(51) Int. Cl.: H02B 1/04

(54) **Gehäuse für ein elektrisches Gerät**
Casing for an electrical apparatus
Boîtier pour appareil électrique

(30) Priorität: 25.02.1988 DE 8802459 U
(43) Veröffentlichungstag der Anmeldung: 30.08.1989
(73) Patentinhaber: Ellenberger & Poensgen GmbH, D-90518 Altdorf (DE)
(72) Erfinder: Heydner, Konrad, D-8503 Altdorf (DE); Onderka, Oswald, D-8503 Altdorf (DE)
(74) Vertreter: Tergau, Enno, Dipl.-Ing.

(56) Entgegenhaltungen:
- DE-A- 2 928 277
- US-A- 4 461 938

## Beschreibung

Die Erfindung betrifft ein Gehäuse für ein elektrisches Gerät und insbesondere für einen Schalter mit den im Oberbegriff des Anspruches 1 angegebenen Merkmalen, das zum Einsetzen in Montageöffnungen von Schalttafeln geeignet ist.

Derartige Gehäuse sind z.B. aus DE-PS 29 28 277 bekannt. Der im wesentlichen quaderförmige Gehäusekörper wird in eine dessen Querschnittsumriß entsprechende Montageöffnung von der Frontseite der Schalttafel her eingeschoben. Als Einschubbegrenzung wirkt die quer zur Einschubrichtung verlaufende, frontseitige Deckwand des Gehäusekörpers mit ihrem allseitig über den Querschnittsumriß des Gehäusekörpers vorstehenden Kragen, der in Montageendstellung an den frontseitigen Randbereichen der Montageöffnung anliegt und diese abdeckt. Die Fixierung des Gehäuses in der Montageendstellung wird durch elastisch federnde Spreizlaschen bewerkstelligt, die an zwei einander abgewandten Seitenwänden des Gehäusekörpers angeformt und von diesen in einem spitzen, sich gegen die Einschubrichtung öffnenden Winkel nach außen abstehen. Deren etwa parallel zur Einschubrichtung verlaufenden Freienden sind auf ihrer Außenseite mit einem Zahnrastprofil versehen, das mit der entsprechenden Randkante der Montageöffnung verhakt. Da die Spreizlaschen beim Einschieben des Gehäusekörpers in die Montageöffnung von deren Randkante einwärts gebogen werden, bauen die Spreizlaschen durch ihre Eigenelastizität eine nach außen gerichtete Federkraft auf, mittels der die Fixierung des Gehäuses in der Montageöffnung gesichert wird.

Bei dieser bekannten Fixierung ergeben sich Probleme, da ein fester Sitz des Gehäuses in der Montageöffnung über einen weiteren Bereich von Schalttafeldicken oft nicht gewährleistet ist. Die Fixierung muß aus Sicherheitsgründen jedoch so stark sein, daß ein Wiederausbau des Gerätes aus der Schalttafel unabhängig von deren Dicke verhindert bzw. nur unter Zuhilfenahme von speziellen Werkzeugen möglich ist.

Der Erfindung liegt davon ausgehend die Aufgabe zugrunde, eine zuverlässige Fixierung des Gehäuses in der Montageöffnung einer Schalttafel bei unterschiedlichsten Tafeldicken zu gewährleisten.

Die Lösung dieser Aufgabe ist in den kennzeichnenden Merkmalen des Anspruches 1 angegeben. Durch die Stützstreben an den Freienden der Spreizlaschen wird in der Montageendstellung des Gehäuses durch die Abstützung dieser Streben an den entsprechenden Seitenwänden eine zusätzliche, nach außen gerichtete Beaufschlagungskraft der Spreizlaschen und damit eine äußerst zuverlässge Verhakung des Zahnrastprofiles mit den entsprechenden Seitenkanten der Montageöffnung erzielt. Da diese zusätzliche Federkraft im wesentlichen unabhängig von der Plattendicke erzeugt wird, wird das Gehäuse über einen weiten Bereich von Schalttafeldicken in der Montageöffnung gesichert.

Durch die Ausgestaltung nach Anspruch 2 ist eine leichtgängige Einschiebbarkeit des Gehäuses in die Montageöffnung gewährleistet. Darüber hinaus werden durch die angegebene Anordnung der Stützstreben diese quer zu ihrer Längsrichtung ausgelenkt. In dieser Richtung weisen die Stützstreben eine große Elastizität und Flexibilität auf, wodurch günstige Federeigenschaften erzielt werden.

Eine vorteilhafte geometrische Anordnung der Spreizlaschen und ihrer Stützstreben ergibt sich durch die Ausgestaltung nach Anspruch 3. Die beschriebene Konstruktion stellt einen optimalen Kompromiß zwischen einer hohen Haltekraft, leichter Einfederbarkeit der Spreizlaschen sowie auf Dauer einer geringen Materialermüdung der Laschen und Streben dar.

Durch die nach Anspruch 4 an die Stützenden der Stützstreben angeformten Abwinklungen wird eine etwa parallel zu den entsprechenden Seitenwänden verlaufende Gleitfläche geschaffen, die den Gleitwiderstand der Stützstreben beim Entlanggleiten ihrer Stützenden an den Seitenwänden während des Einschiebens des Gehäuses in die Montageöffnung und die entsprechend aufzuwendenden Kräfte herabsetzt. Darüber hinaus wird durch diese Gleitfläche ein Verhaken der Stützenden mit eventuell vorhandenen Unebenheiten in der Oberfläche der Gehäuseseitenwände und damit verbundene Hemmnisse beim Einschieben des Gehäuses in die Montageöffnung vermieden.

Die Fixierung des Gehäuses an sich wird durch die Ausgestaltung nach Anspruch 5 wesentlich verbessert. Zum einen bewirkt die Verdoppelung der Spreizlaschenzahl an sich bereits eine wesentliche Erhöhung der Haltekraft der Spreizlaschen, zum anderen können durch die getrennten Spreizlaschen Maß- und Formabweichungen der Montageöffnung optimal ausgeglichen werden. Der Mittenspalt ermöglicht darüber hinaus eine Verschiebebewegung der beiden Spreizlaschen in ihrer Hauptebene aufeinander zu.

Eine weitere Verbesserung der Gehäusefixierung wird durch die im Anspruch 6 angegebene Maßnahme erzielt. Da die einander abgewandten Seitenkanten der Freienden der Spreizlaschen über den entsprechenden Gehäusekörperumriß hinausstehen, kann eine zusätzliche Verhakung der Spreizlaschen mit den Längsseiten der Montageöffnung erzielt werden. Damit ist das Gehäuse auch gegen seitliches Verschieben in der Montageöffnung gesichert. Durch das zusätzliche Zahnrastprofil an den einander abgewandten Seitenkanten der Spreizlaschen wird eine zusätzliche Verhakung der Spreizlaschen mit der Montageöffnung erzielt. Da die Spreizlaschen dabei in Richtung einwärts aufeinander zu gebogen werden - einer Richtung also, in der sie eine hohe Steifigkeit aufweisen - wird durch die angegebene Ausgestaltung eine sehr hohe Zusatzhaltekraft mit einer drastischen Verbesserung der Fixierung des Gehäuses in der Montageöffnung erzielt.

Damit die aufzuwendenden Kräfte beim Einschieben des Gehäuses in die Montageöffnung nicht zu hoch werden, sind die einander abgewandten Seitenkanten der Spreizlaschen mit nach außen verlaufenden Gleitschrägen versehen (Anspruch 7).

Der im Anspruch 8 angegebene Sperrzahn verhindert ein unbefugtes, gewaltsames Herausziehen des Gehäuses aus der Montageöffnung. Dies ist nur mit einem speziellen Werkzeug möglich, wodurch einschlägige Berührungsschutzbestimmungen eingehalten werden. Auch kann durch starken Gegendruck von unten - beispielsweise aufgrund von Kräften, die von den angeklemmten Kabeln herrühren - das Gehäuse nur bis zu den Sperrzähnen aus der Montageöffung herausgehoben werden. Eine sichere Abdeckung spannungsführender Teile ist in dieser Stellung nach wie vor gegeben.

Die Erfindung wird anhand der beiliegenden Figuren in einem Ausführungsbeispiel näher erläutert. Es zeigen:
- Fig. 1: eine perspektivische Darstellung des Gehäuses,
- Fig. 2: dessen Längsseitenansicht,
- Fig. 3: eine Seitenansicht aus Pfeilrichtung III gemäß Fig. 2,
- Fig. 4: eine Längsseitenansicht des Gehäuses in Montageendstellung und
- Fig. 5: eine Seitenansicht des Gehäuses aus Pfeilrichtung V gemäß Fig. 4.

Die Figuren zeigen ein aus Isolierwerkstoff einstückig gefertigtes Schaltergehäuse (1) mit einem im wesentlichen quaderförmigen Gehäusekörper (2). Dessen Bodenseite (3) ist offen. Durch die entsprechende Öffnung (4) kann beispielsweise eine (nicht dargestellte) Schaltereinheit eingeschoben und im Gehäuse (1) fixiert werden. Die Deckwand (5) des Gehäusekörpers (2) weist eine rechteckförmige Öffnung (6) auf, durch die das Bedienungselement - beispielsweise eine Schaltwippe - der Schaltereinheit ragt. In den Längsseitenwänden (7) sind verschiedene Durchbrechungen (8) vorhanden, in die beispielsweise Rastelemente an der Außenseite der Schaltereinheit zu deren Halterung im Gehäusekörper (2) eingreifen können.

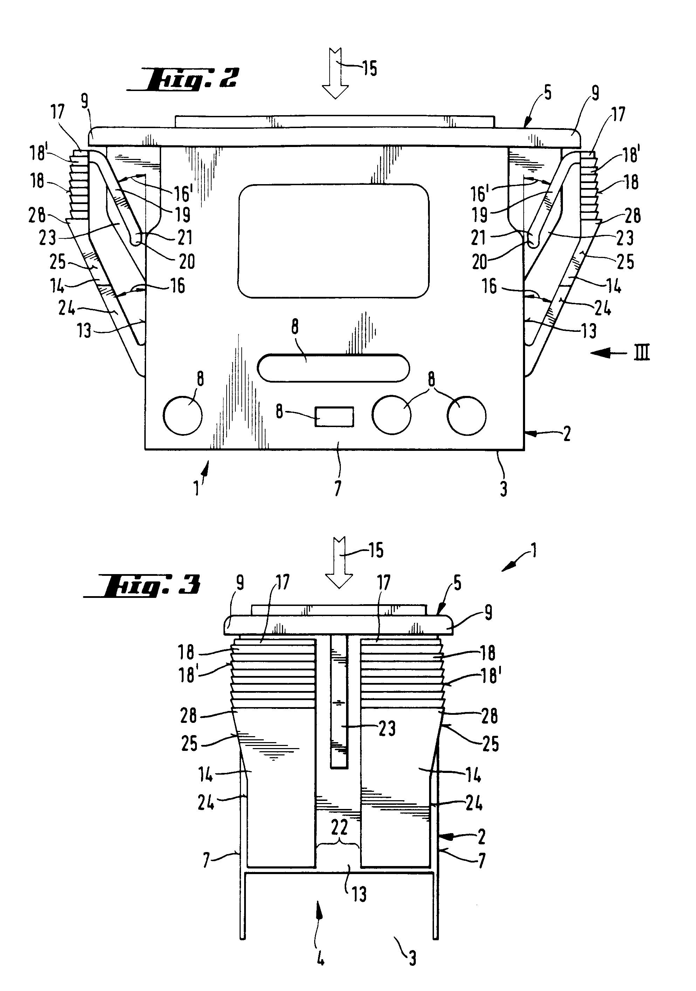

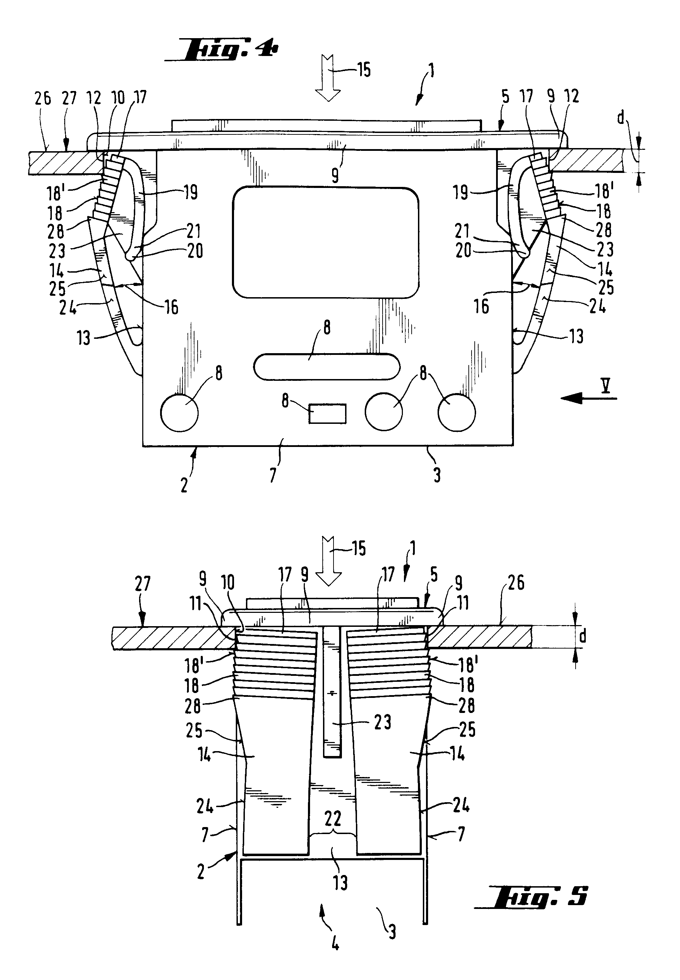

Die Deckwand (5) ist durch einen allseitig über den Querschnittumriß des Gehäusekörpers vorstehenden Kragen (9) derart gegenüber der rechteckigen Montageöffnung (10) vergrößert, daß der Kragen (9) als Einschubbegrenzung und Randabdeckung in Montageendstellung des Gehäusekörpers (2) die frontseitigen Randbereiche der Längs- (11) und Querseitenkanten (12) der Montageöffnung abdeckt (Fig. 4,5).

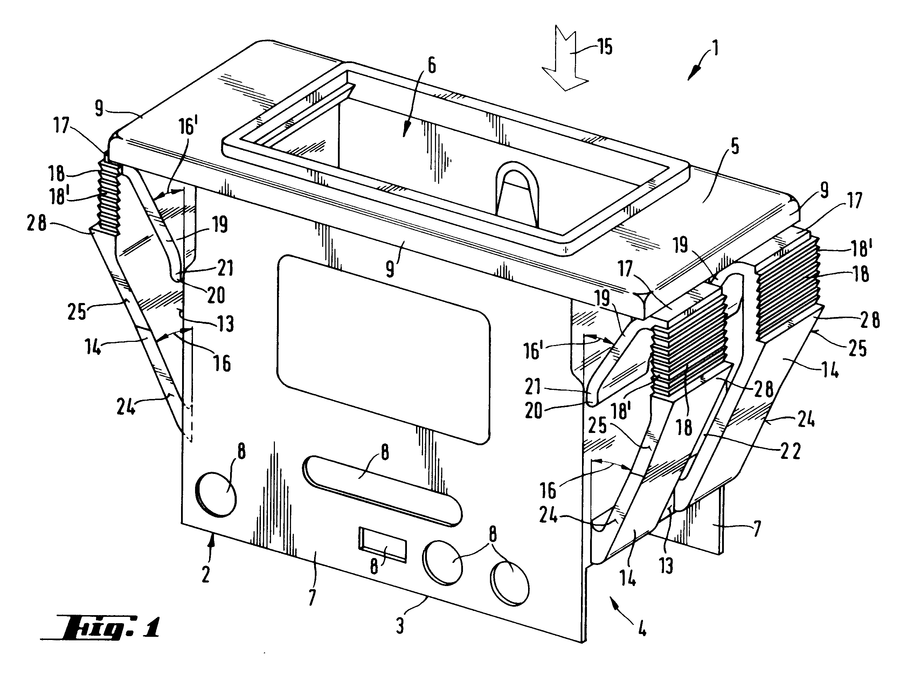

An den zwei einander abgewandten Schmalseitenwänden (13) des Gehäusekörpers (2) sind in der Nähe dessen Bodenseite (3) jeweils zwei Spreizlaschen (14) einstückig angeformt. Diese sind elastisch federnd ausgebildet und stehen in einem spitzen, sich gegen die Einschubrichtung (15) öffnenden Winkel (16) nach außen ab. Sie weisen über ihre ganze Länge einen flach-rechteckigen Querschnitt auf. Bei nicht eingeschobenem Schaltergehäuse (1) verläuft das Freiende (17) der Spreizlaschen (14) parallel zur Einschubrichtung (15) (Fig. 2). Es endet jeweils unmittelbar vor dem Kragen (9) der Deckwand (5) und weist jeweils auf seiner Außenseite ein Zahnrastprofil (18) zur Fixierung des Schaltergehäuses (1) an den Querseitenkanten (12) der Montageöffnung (10) auf.

An die Freienden (17) der Spreizlaschen (14) sind jeweils einstückig Stützstreben (19) angeformt, die sich einwärts zu den entsprechenden Schmalseitenwänden (13) erstrecken und in der in den Fig. 1-3 gezeigten Stellung kurz vor diesen enden. Auch die Stützstreben (19) verlaufen jeweils in einem spitzen, sich gegen die Einschubrichtung (15) öffnenden Winkel (16′) zur entsprechenden Schmalseitenwand (13). Die Stützenden (20) sind bezogen auf die Länge der Spreizlaschen (14) etwa mittig angeordnet. Sie weisen jeweils eine parallel zur Einschubrichtung (15) verlaufende, kurze Abwinklung (21) auf, die eine Gleitfläche für die Stützenden (20) der Stützstreben (19) bildet.

Wie aus den Fig. 1,3 und 5 deutlich wird, sind die beiden an eine Schmalseitenwand (13) angeformten Spreizlaschen (14) durch einen Mittenspalt (22) voneinander beabstandet. In diesem Mittenspalt ist der in der Mittellängsebene des Schaltergehäuses (1) liegende Ausrichtsteg (23) angeordnet, durch den ein ausreichender Federweg für die Spreizlaschen (14) zur Verfügung steht. Die einander abgewandten Seitenkanten (24) der Freienden (17) der Spreizlaschen (14) stehen über den durch die Abmessungen der Schmalseitenwand (13) gegebenen Gehäusekörperumriß hinaus. Sie sind mit einem zusätzlichen Zahnrastprofil (18′) versehen. Der Mittenbereich der einander abgewandten Seitenkanten (24) der Spreizlaschen (14) ist nach Art einer Gleitschräge (25) ausgebildet. Dazu verlaufen die Seitenkanten (24) hier spitzwinklig entgegen der Einschubrichtung (15) über den Gehäusekörperumriß hinaus nach außen.

In Fig. 4 und 5 ist die Montageendstellung des Schaltergehäuses (1) in der Montageöffnung (10) einer Schalttafel (27) dargestellt. Bei der Montage wird der Gehäusekörper (2) von der Frontseite (26) der Schalttafel (27) her mit seiner Bodenseite (3) in die Montageöffnung (10) eingesteckt. Die beiden Spreizlaschen (14) werden dabei durch die Querseitenkanten (12) der Montageöffnung (10) gegen deren nach außen gerichtete Federkraft einwärts gedrückt, wobei die Stützstreben (19) der Spreizlaschen (14) sich jeweils an den Schmalseitenwänden (13) des Gehäusekörpers (2) abstützen und eine zusätzliche Federkraft nach außen erzeugen. Der Gehäusekörper (2) wird bis zur Anlage des Kragens (9) der Deckwand (5) an die Längs- (11) und Querseitenkanten (12) der Montageöffnung (10) eingeschoben. Der entsprechende Rastzahn des Zahnrastprofiles (18) verhakt mit den entsprechenden Randkantenbereichen der Montageöffnung (10), wodurch das Schaltergehäuse (1) mit einer hohen Haltekraft in der Montageöffnung (10) fixiert ist. Da die Stützstreben (19) die Spreizlaschen (14) zusätzlich nach außen beaufschlagen, wird das Schaltergehäuse (1) zuverlässig und unabhängig von der Dicke (d) der Schalttafel gehalten. Es können Dickenbereiche von typisch 1-6,3 mm abgedeckt werden.

Wie aus Fig. 5 deutlich wird, werden die Spreizlaschen (14) durch den Überstand ihrer Seitenkanten (24) beim Einschieben des Gehäusekörpers (2) in die Montageöffnung (10) zusätzlich in ihrer Hauptebene nach innen gedrückt, wodurch eine Spreizkraft auch in Richtung auf die Längsseitenkanten (11) der Montageöffnung hervorgerufen wird. Entsprechend wird durch das an den Seitenkanten (24) angebrachte Zahnrastprofil (18′) der Gehäusekörper (2) zusätzlich fixiert. Die Spreizlaschen verspreizen sich also nicht nur gegen die Quer- (12), sondern auch gegen die Längsseitenkanten (11), wodurch das Schaltergehäuse (1) gegen seitliches Verschieben in der Montageöffnung (10) gesichert ist. Ein weiterer Vorteil des Erfindungsgegenstandes liegt also darin, daß das für ein leichtgängiges Einschieben des Schaltergehäuses (1) vorhandene Spiel zwischen den durch die Breite des Gehäusekörpers und durch den Abstand der beiden Außenkanten des Ausrichtsteges (23) gegebenen Abmessungen des Gehäusekörpers (2) und der Montageöffnung (10) sowohl in Längs-als auch Querrichtung ausgeglichen wird.

Jede Spreizlasche (14) ist jeweils mit einem Sperrzahn (28) versehen, der angrenzend an das in Einschubrichtung (15) weisende Ende jedes Zahnrastprofils (18) angeordnet ist. Die Sperrzähne (28) verlaufen quer zur Einschubrichtung (15) und ragen über das jeweilige Zahnrastprofil (18) nach außen. Damit kann bei hohem Zug am Gehäuse (1) bzw. Gegendruck von unten jeweils gegen die Einschubrichtung (15) der Gehäusekörper (2) nur so weit aus der Montageöffnung (10) herausgehoben werden, bis die Sperrzähne (28) in Eingriff mit den Querseitenkanten (12) gelangen. Jede weitere Bewegung des Gehäusekörpers (2) ist nur möglich, nachdem die Spreizlaschen (14) mittels eines Werkzeuges nach innen gedrückt worden sind.

### Bezugszeichen

- 1: Schaltergehäuse
- 2: Gehäusekörper
- 3: Bodenseite
- 4: Öffnung
- 5: Deckwand
- 6: Öffnung
- 7: Längsseitenwand
- 8: Durchbrechung
- 9: Kragen
- 10: Montageöffnung
- 11: Längsseitenkante
- 12: Querseitenkante
- 13: Schmalseitenwand
- 14: Spreizlasche
- 15: Einschubrichtung
- 16,16′: Winkel
- 17: Freiende
- 18,18′: Zahnrastprofil
- 19: Stützstrebe
- 20: Stützende
- 21: Abwinklung
- 22: Mittenspalt
- 23: Ausrichtsteg
- 24: Seitenkante
- 25: Gleitschräge
- 26: Frontseite
- 27: Schalttafel
- 28: Sperrzahn
- d =: Dicke

## Patentansprüche

1. Gehäuse für ein elektrisches Gerät, insbesondere für einen Schalter zum Einsetzen in Montageöffnungen (10) von Schalttafeln (27) mit einem im wesentlichen quaderförmigen, durch die Montageöffnung (10) hindurchschiebbaren Gehäusekörper (2),
- dessen quer zur Einschubrichtung (15) verlaufende, frontseitige Deckwand (5) durch einen allseitig über den Querschnittsumriß des Gehäusekörpers (2) vorstehenden Kragen (9) derart vergrößert ist, daß letzterer als Einschubbegrenzung und Randabdeckung in Montagestellung des Gehäuses (1) die frontseitigen Randbereiche (11,12) der jeweiligen Montageöffnung (10) abdeckt, und
- der mindestens an zwei einander abgewandten Seitenwänden (13) jeweils elastisch federnde Spreizlaschen (14) aufweist,
- die in einem spitzen, sich gegen die Einschubrichtung (15) öffnenden Winkel (16) von den entsprechenden Seitenwänden (13) nach außen abstehen,
- deren vorzugsweise parallel zur Einschubrichtung (15) verlaufenden Freienden (17)
- jeweils unmittelbar vor dem Kragen (9) der Deckwand (5) enden und
- jeweils auf ihrer Außenseite ein Zahnrastprofil (18) zur Fixierung des Gehäuses (Schaltergehäuse 1) an den Randkanten (11,12) der Montageöffnung (10) aufweisen,
dadurch gekennzeichnet,
daß an die Freienden (17) der Spreizlaschen (14) jeweils Stützstreben (19) angeformt sind,
- die sich einwärts zu den entsprechenden Seitenwänden (13) erstrecken und
- die sich zumindest in Montageendstellung des Gehäuses (1) mit ihren Stützenden (20) an der Seitenwand (13) federnd abstützen.

2. Gehäuse nach Anspruch 1,
dadurch gekennzeichnet,
daß die Stützstreben (19) jeweils in einem spitzen, sich gegen die Einschubrichtung öffnenden Winkel (16′) zur entsprechenden Seitenwand (13) verlaufen.

3. Gehäuse nach Anspruch 2,
dadurch gekennzeichnet,
daß die Stützenden (20) der Stützstreben (19) etwa mittig bezogen auf die Länge der Spreizlaschen (14) angeordnet sind.

4. Gehäuse nach Anspruch 2 oder 3,
dadurch gekennzeichnet,
daß an die Stützenden (20) der Stützstreben (19) jeweils eine parallel zur Einschubrichtung (15) verlaufende Abwinklung (21) angeformt ist.

5. Gehäuse nach einem der vorgenannten Ansprüche,
dadurch gekennzeichnet,
daß an die einander abgewandten Seitenwände (13) des Gehäusekörpers (2) jeweils zwei Spreizlaschen (14) nebeneinanderliegend angeformt sind, die durch einen Mittenspalt (22) voneinander beabstandet sind.

6. Gehäuse nach Anspruch 5,
dadurch gekennzeichnet,
daß die einander abgewandten Seitenkanten (24) der Freienden (17) der Spreizlaschen (14) über den entsprechenden Gehäusekörperumriß hinausstehen und mit einem zusätzlichen Zahnrastprofil (18′) versehen sind.

7. Gehäuse nach Anspruch 6,
dadurch gekennzeichnet,
daß die einander abgewandten Seitenkanten (24) der Spreizlaschen (14) zumindest teilweise als entgegen der Einschubrichtung (15) spitzwinklig über den entsprechenden Umriß des Gehäusekörpers (2) hinaus nach außen verlaufende Gleitschräge (25) ausgebildet sind.

8. Gehäuse nach einem der vorgenannten Ansprüche,
gekennzeichnet durch
jeweils einen Sperrzahn (28) an jeder Spreizlasche (14), der
- angrenzend an das in Einschubrichtung (15) weisende Ende des Zahnrastprofils (18) angeordnet ist,
- quer zur Einschubrichtung (15) verläuft und
- über das jeweilige Zahnrastprofil (18) nach außen ragt.

## Claims

1. A casing for an electrical device, in particular for a switch, for insertion in the fitting openings (10) of switch panels (27) with an, in esssence, parallelepiped-shaped casing body (2) which can be inserted through the fitting opening (10),
- whose front covering wall (5) extending transversely to the insertion direction (15) is enlarged by a surround (9) projecting on all sides beyond the cross-sectional contour of the casing body (2), in such a way that the surround covers the frontal edge zones (11, 12) of the respective fitting opening (10) as a stop limiting insertion and edge delimitation when the casing (1) is mounted, and
- which has on at least two side walls (13) facing away from each other (the narrow side walls 13), expansion brackets (14) which are each elastically sprung,
- which brackets project outwards in an acute angle (16) opening out against the insertion direction (15) from the corresponding side walls (13),
- whose free ends (17) extending preferably parallel to the insertion direction (15)
- end respectively directly in front of the surround (9) of the covering wall (5) and
- respectively have on their outer side a serrated locking profile (18) for fixing the casing (1) on the border edges (11, 12) of the fitting opening (10),
characterized in that
supporting struts (19) are respectively moulded on to the free ends (17) of the expansion brackets (14),
- which struts extend inwards towards the corresponding side walls (13) and
- which bear elastically on the side wall (13) with their bearing ends (20) at least when the casing (1) is in its final fitted position.

2. A casing according to claim 1,
characterized in that
the supporting struts (19) extend respectively in an acute angle (16') opening out against the insertion direction towards the corresponding side wall (13).

3. A casing according to claim 2,
characterized in that
the bearing ends (20) of the supporting struts (19) are arranged approximately centrally with reference to the length of the expansion brackets (14).

4. A casing according to claim 2 or 3,
characterized in that
a respective bent portion (21), extending parallel to the insertion direction (15), is shaped on the bearing ends (20) of the supporting struts (19).

5. A casing according to one of the preceding claims,
characterized in that
two expansion brackets (14) lying next to each other are formed respectively on the side walls (13) facing away from each other, of the casing body (2) which brackets are separated from each other by a central gap (22).

6. A casing according to claim 5,
characterized in that
the side edges (24) facing away from each other of the free ends (17) of the expansion brackets (14) project beyond the corresponding contour of the casing body and are provided with an additional serrated locking profile (18).

7. A casing according to claim 6,
characterized in that
the side edges (24) facing away from each other of the expansion brackets (14) are formed at least partly as sliding inclined portions extending outwards in an acute angle against the insertion direction (15) beyond the corresponding contour of the casing body (2).

8. A casing according to one of the preceding claims,
characterized by
one locking tooth (28) respectively on each expansion bracket (14) which
- is arranged next to the end of the serrated locking profile (18) pointing in the insertion direction (15),
- and extends transversely to the insertion direction (15) and projects outwards beyond the respective serrated locking profile (18).

## Revendications

1. Boîtier pour un appareil électrique, en particulier pour un interrupteur destiné à être inséré dans une ouverture de montage (10) d'un tableau de commande (27), comprenant un corps de boîtier (2) essentiellement parallélépipédique, que l'on peut faire passer à travers l'ouverture de montage (10),
- dont la paroi frontale de recouvrement (5), s'étendant transversalement à la direction d'insertion (15), est agrandie par un rebord (9) qui dépasse de tous côtés du contour de la section droite du corps de boîtier (2), de manière que ce rebord, formant un élément de limitation du mouvement d'insertion et de recouvrement du bord de l'ouverture, recouvre, en position montée du boîtier (1), les zones marginales (11, 12) du côté frontal de l'ouverture de montage (10), et
- qui présente des pattes élastiques écartées (14) sur chacune d'au moins deux parois latérales (13) mutuellement opposées, pattes
- qui font saillie vers l'extérieur à partir des parois latérales concernées (13) sous un angle aigu (16) s'ouvrant en sens contraire à la direction d'insertion (15), et
- dont les extrémités libres (17), s'étendant de préférence parallèlement à la direction d'insertion (15)
- se terminent chacune à proximité immédiate devant le rebord (9) de la paroi de recouvrement (5) et
- présentent chacune, sur leur côté extérieur, un profil cranté d'arrêt (18) pour la fixation du boîtier (1) sur les côtés du bord (11, 12) de l'ouverture de montage (10),
caractérisé en ce que
une languette de soutien (19) est formée sur l'extrémité libre (17) de chaque patte écartée (14), languette
- qui s'étend vers l'intérieur en direction de la paroi latérale adjacente (13) et
- s'appuie élastiquement, tout au moins à la position finale de montage du boîtier (1) sur la paroi latérale (13) par son extrémité d'appui (20).

2. Boîtier selon la revendication 1, caractérisé en ce que les languettes de soutien (19) s'étendent chacune sous un angle aigu (16'), s'ouvrant en sens contraire à la direction d'insertion, par rapport à la paroi latérale adjacente (13).

3. Boîtier selon la revendication 2, caractérisé en ce que les extrémités d'appui (20) des languettes de soutien (19) sont situées à peu près à mi-longueur des pattes écartées (14).

4. Boîtier selon la revendication 2 ou 3, caractérisé en ce que les extrémités d'appui (20) des languettes de soutien (19) sont pourvues chacune d'une partie coudée (21) orientée parallèlement à la direction d'insertion (15).

5. Boîtier selon l'une des revendications précédentes, caractérisé en ce que deux pattes écartées (14) sont formées l'une à côté de l'autre sur chacune des parois latérales mutuellement opposées (13) du corps de boîtier (2) et sont séparées l'une de l'autre par une fente centrale (22).

6. Boîtier selon la revendication 5, caractérisé en ce que les côtés latéraux (24) mutuellement opposés des extrémités libres (17) des pattes écartées (14) font saillie du pourtour du corps de boîtier aux endroits concernés et sont pourvus d'un profil cranté d'arrêt (18') supplémentaire.

7. Boîtier selon la revendication 6, caractérisé en ce que les côtés latéraux (24) mutuellement opposés des pattes écartées (14) sont réalisés, en partie au moins, comme des rampes de glissement (25) orientées sous un angle aigu en sens contraire à la direction d'insertion (15) et s'étendant vers l'extérieur au-delà du pourtour du corps de boîtier (2) aux endroits concernés.

8. Boîtier selon l'une des revendications précédentes, caractérisé par la présence sur chaque patte écartée (14) d'une dent de blocage (28) qui
- est disposée adjacente à l'extrémité orientée dans la direction d'insertion (15) du profil cranté d'arrêt (18) et
- s'étend transversalement à la direction d'insertion (15) en faisant saillie vers l'extérieur par rapport au profil cranté d'arrêt (18) concerné.
